# EUROPÄISCHE PATENTSCHRIFT

(11) **EP 0 832 365 B1**
(45) Veröffentlichungstag und Bekanntmachung des Hinweises auf die Patenterteilung: **14.07.1999**
(21) Anmeldenummer: 96911908.0
(22) Anmeldetag: 23.04.1996
(51) Int. Cl.: F16C 13/00, D21G 1/02

(54) **DURCHBIEGUNGSSTEUERBARE WALZE**
ROLLER WITH CONTROLLABLE SAG
CYLINDRE A FLEXION POUVANT ETRE CONTROLEE

(30) Priorität: 16.06.1995 DE 19521859
(43) Veröffentlichungstag der Anmeldung: 01.04.1998
(73) Patentinhaber: Eduard Küsters Maschinenfabrik GmbH & Co. KG, 47805 Krefeld (DE)
(72) Erfinder: KÜSTERS, Karl-Heinz, D-47804 Krefeld (DE); MARK, Wolfgang, D-40670 Meerbusch (DE)
(74) Vertreter: Palgen, Peter, Dipl.-Phys. Dr.
(86) Internationale Anmeldenummer: DE9600702
(87) Internationale Veröffentlichungsnummer: WO9700384

(56) Entgegenhaltungen:
- DE-A- 2 550 270
- DE-A- 3 941 965
- DE-C- 4 430 667
- GB-A- 1 059 366
- US-A- 1 432 645

## Beschreibung

Die Erfindung bezieht sich auf eine Walze der dem Oberbegriff des Anspruchs 1 entsprechenden Art.

Bei derartigen Walzen sind meist etwa zwanzig bis achtzig Stützelemente über die Länge verteilt in einer Reihe üblicherweise auf der Seite des Walzspalts angeordnet, die nach Art von Kolben/Zylindereinheiten ausgebildet sind und gegen den Innenumfang der Hohlwalze anliegen, wobei in der Anlagefläche Lagertaschen ausgebildet sind, die einen hydrostatischen Druck gegen den Innenumfang der Hohlwalze ausüben und aus denen Druckflüssigkeit ständig über die Berandung der Lagertaschen abströmt, so daß ein tragfähiger Flüssigkeitsfilm aufrechterhalten wird, der eine metallische Berührung zwischen dem Stützelement und dem Innenumfang der Hohlwalze unterbindet.

Im Betrieb müssen diese Stützelemente mit mindestens einem fluiden Druckmedium versorgt werden. Meist handelt es sich dabei um eine Druckflüssigkeit, insbesondere ein Drucköl, welches unter Umständen auch als Wärmeträgermedium dient. Gas-, insbesondere luftbetriebene Stützelemente sind aber nicht ausgeschlossen.

Beispiele derartiger Walzen sind in den folgenden Schriften wiedergegeben: US-A-3119324, DE 22 30 139 B2, US-A-2395915, DE 36 40 902 C2, DE 38 20 974 C2.

Die Stützelemente werden in vielen Fällen zu mehreren zu Gruppen zusammengefaßt, die einen gemeinsamen Druck des fluiden Druckmediums erhalten und somit nur einer einzelnen Versorgungsleitung bedürfen. Je kleiner die Gruppen sind, desto mehr Versorgungsleitungen müssen vorhanden sein. Wenn im Extremfall jedes Stützelement separat beaufschlagt werden soll, um die Linienkraft besonders feinfühlig beeinflussen zu können, müssen mindestens ebensoviele Versorgungsleitungen wie Stützelemente vorhanden sein. Da die Versorgungsleitungen einen Mindestquerschnitt nicht unterschreiten können, weil die Stützelemente zu ihrem einwandfreien Betrieb, insbesondere zur Aufrechterhaltung des trennenden Flüssigkeitsfilms eine gewisse Durchsatzmenge benötigen, bedeutet die Heranführung des Druckmediums zu den einzelnen Stützelementen oder Gruppen derselben ein Problem, weil nur ein sehr begrenzter Querschnitt dafür zur Verfügung steht. Das Querhaupt, welches sich unter der durch die Linienkraft gegebenen Streckenlast im Innern der Hohlwalze durchbiegt, darf in seinem tragenden Querschnitt nur unwesentlich geschwächt werden, wenn die Walze höhere Liniendrücke erzeugen können soll.

Eine erste Möglichkeit zur Versorgung der Stützelemente ist Gegenstand der DE 24 07 510 B2, bei der an der Stelle jedes Stützelements ein Steuerventil vorgesehen ist, mittels welchem auf aus der durch einen zentralen Hauptkanal herangeführten Druckflüssigkeit durch Minderung ein für jedes Stützelement angepaßter Betätigungsdruck gebildet wird. Das jeweilige Ventil wird z.B. pneumatisch fernbetätigt. Es sind also auch wieder entsprechend viele Fernbetätigungsleitungen unterzubringen. Die Anordnung einer Vielzahl von Ventilen ist aufwendig, und die Schwächung des Querschnitts ist nicht unbeträchtlich. Besonders aber ist nachteilig, daß die Ventile in der Walze sitzen, so daß bei einer Störung auch nur eines Ventils die ganze Walze demontiert werden muß.

Bei anderen Ausführungsformen ist die Ventilanordnung außerhalb der Walze vorgesehen. In der DE 26 57 061 C2 und der dem Oberbegriff des Anspruchs 1 zugrundeliegenden DE 25 50 270 C3 werden ein oder mehrere Zuleitungen dadurch gebildet, daß in der Längsausnehmung des Querhaupts verstellbare Abschottungen vorgesehen sind und der Bereich zwischen den einzelnen Abschottungen durch entsprechende Bohrungen des Querhaupts oder konzentrische Rohranordnungen mit Druckmedium versorgt wird. Dieses wird dann der Gruppe von Stützelementen zugeteilt, deren Zuleitungen in dem Bereich zwischen den betreffenden Abschottungen in die Längsausnehmung münden. Für höhere Zahlen von separat zu versorgenden Stützelementen oder Gruppen derselben, wie z.B. bei der Walze nach dem DE-GM 93 14 568 vorkommen, sind derartige Anordnungen ungeeignet. Insbesondere ist die Trennung an den einzelnen Abschottungen durch die begrenzte Leistungsfähigkeit der Dichtungen, die ja das Einschieben und Herausziehen überstehen müssen, nur für relativ geringe Drücke geeignet.

Ob eine Vielzahl von Rohrleitungen in einzelne Abschottungen führen oder ob, womit eine Reihe von Nachteilen der Abschottungen behoben wären, Rohrleitungen unmittelbar bis in einzelne Stützelemente oder Gruppen von Stützelementen gelegt sind - in jedem Fall liegen am Ende des Querhauptes viele Rohrleitungen vor, die mit äußeren Anschlußleitungen in Betrieb verbunden sind. Wenn eine Walze ausgewechselt werden muß, müssen alle diese Rohrleitungen an entsprechenden Trennstellen abgetrennt werden, wobei das in den Rohrleitungen noch anstehende Öl Probleme bereitet.

Der Erfindung liegt die Aufgabe zugrunde, eine gattungsgemäße durchbiegungssteuerbare Walze so auszugestalten, daß das Auswechseln der Walze erleichtert ist.

Bei einer erfindungsgemäßen Walze nach Anspruch 1 wird dies dadurch erreicht, daß die einzelnen Leitungen nicht mehr je für sich abgetrennt und abgedichtet werden müssen, sondern die Abtrennung und gleichzeitige Abdichtung für alle Leitungen gemeinsam vorgenommen werden kann.

Durch die Ausgestaltung nach Anspruch 2 können Abtrennung und Verschließen der vorher benachbarten Enden gewissermaßen mit einem Handgriff erfolgen. Es ist hierdurch eine Art Schnellanschluß geschaffen, der den Walzenwechsel beispielsweise bei Defekten oder aber auch beim bloßen Übergang beispielsweise von einer Walze mit einem Belag auf eine Walze mit einem anderen Belag wesentlich erleichtert, auch insofern, als die gesamte äußere Versorgungsanordnung mit Pumpen und Steuer- und Regeleinrichtungen unangetastet bleiben kann.

Zur gemeinsamen Abtrennung bzw. Verbindung aller Versorgungsund Anschlußleitungen können alle hierfür geeigneten Steuerelemente dienen, also z.B. Schieberanordnungen mit geradlinig verlagerbaren spindelartigen Schiebern.

Aus konstruktiven und fertigungsmäßigen Gründen ist jedoch in der bevorzugten Ausführungsform nach Anspruch 3 ein Drehschieber vorgesehen.

Der Anschlußkopf mit einem solchen Drehschieber ist zweckmäßig in der in Anspruch 4 wiedergegebenen Weise gestaltet.

Die beiden Träger und der Doppelscheiben-Drehschieber liegen aufeinander paketartig oder stapelartig an, und es ist der Doppelscheiben-Drehschieber gegenüber den beiden Trägern zwischen der Schließstellung und der Durchlaßstellung verdrehbar.

Konstruktiv kann dies in der in Anspruch 5 wiedergegebenen Weise verwirklicht werden.

Die erste Scheibe des Doppelscheiben-Drehschiebers liegt an dem ersten Träger dichtend an, die zweite Scheibe an dem zweiten Träger. Wenn die Walze von der Anschlußanordnung abgetrennt werden soll, muß dafür gesorgt sein, daß die Anlage der ersten Scheibe an dem ersten Träger und der zweiten Scheibe an dem zweiten Träger je für sich ohne weiteres aufrechterhalten bleibt, damit sowohl die Abdichtung an den Enden der Versorgungsleitungen als auch die Abdichtung an den Enden der Anschlußleitungen gewährleistet ist.

Im Hinblick auf die Versorgungsleitungen wird dies durch die in Anspruch 6 wiedergegebene Gestaltung erreicht.

Der Ring hält also die erste Scheibe gegen die Stirnseite des ersten Trägers. Diese Anlage kann durch eine federnde Anordnung gemäß Anspruch 7 besonders satt gemacht werden.

Als federnde Anordnung kommen z.B. ein elastisch kompressibler Ring oder mehrere über den Umfang verteilte achsparallele Schraubendruckfedern in Betracht.

Zur Sicherung der separaten Anlage der zweiten Scheiben an dem zweiten Träger dient die Bundbuchse nach Anspruch 8, die gemäß Anspruch 9 ebenfalls mit einer federnden Anordnung versehen sein kann.

Die zweite Scheibe und der zweite Träger können gemäß Anspruch 10 auf dem Buchsenteil der Bundbuchse angeordnet sein und bei der Trennung des Doppelscheiben-Drehschiebers gemeinsam mit dieser von dem Zapfen abgezogen werden. Die Bundbuchse bildet also das gemeinsame Lagerelement für die zweite Scheibe und dem zweiten Träger.

Damit der zweite Träger sich bei einer Verdrehung des Doppelscheiben-Drehschiebers nicht mitdrehen kann, wodurch die Schließwirkung des Doppelscheiben-Drehschiebers erheblich beeinträchtigt würde, ist die Gestaltung nach Anspruch 11 zweckmäßig.

Das Ziel ist, den Verschluß der Versorgungsleitungen und der Anschlußleitungen "mit einem Handgriff" herzustellen.

Hierzu dient die Ausgestaltung des Anspruch 12, die zur Folge hat, daß der Doppelscheibendrehschieber während der Öffnungs- oder Schließbewegung wie eine Einheit fungiert, dennoch aber in Achsrichtung in die Einzelscheiben trennbar ist.

Die Drehkopplung kann in der in Anspruch 13 beschriebenen Weise durch einen achsparallelen Stift erfolgen, der gemäß Anspruch 14 noch die Zusatzfunktion der Begrenzung des Drehwinkels des Doppelscheiben-Drehschiebers zugewiesen bekommen kann.

Wenn der Doppelscheiben-Drehschieber geschlossen ist, sind zwar die in der Walze verlaufenden Versorgungsleitungen und auch die äußeren Anschlußleitungen abgetrennt, doch befindet sich in den achsparallelen Durchgangsbohrungen des Doppelscheiben-Drehschiebers noch Öl, welches bei der Trennung der beiden Scheiben austritt.

Um unkontrollierte Verunreinigungen durch dieses Öl zu unterbinden, kann eine Sammelrinne gemäß Anspruch 15 vorgesehen werden.

Wenn die Abtrennung der Leitungen erfolgt ist, liegen die einander zugewandten Stirnseiten der beiden Scheiben des Doppelscheiben-Drehschiebers frei. Es kann hier noch Restöl nachtropfen. Außerdem können Verunreinigungen in die Durchgangsbohrungen der beiden Scheiben eintreten.

Um dies zu verhindern, werden die beiden Scheiben in getrenntem Zustand zweckmäßig mittels Abdeckscheiben nach Anspruch 16 abgedeckt.

In der Zeichnung ist ein Ausführungsbeispiel der Erfindung dargestellt.
Fig. 1 zeigt einen durch die Achse gehenden Längsschnitt durch den Endbereich einer durchbiegungssteuerbaren Walze;
Fig. 2 zeigt einen Querschnitt nach der Linie II-II bzw. IIa-IIa in Fig. 1 in vergrößertem Maßstab;
Fig. 3 zeigt einen Querschnitt durch das Querhaupt nach der Linie III-III in Fig. 1;
Fig. 4 zeigt eine vergrößerte Schnittwiedergabe des in Fig. 1 an das rechte Ende des Querhaupts angesetzten Anschlußkopfes im Durchlaßzustand;
Fig. 5 und 6 zeigen die Teile des Anschlußkopfes nach Fig. 4 im Trennzustand;
Fig. 7 zeigt eine Ansicht gemäß Fig. 4 von rechts.

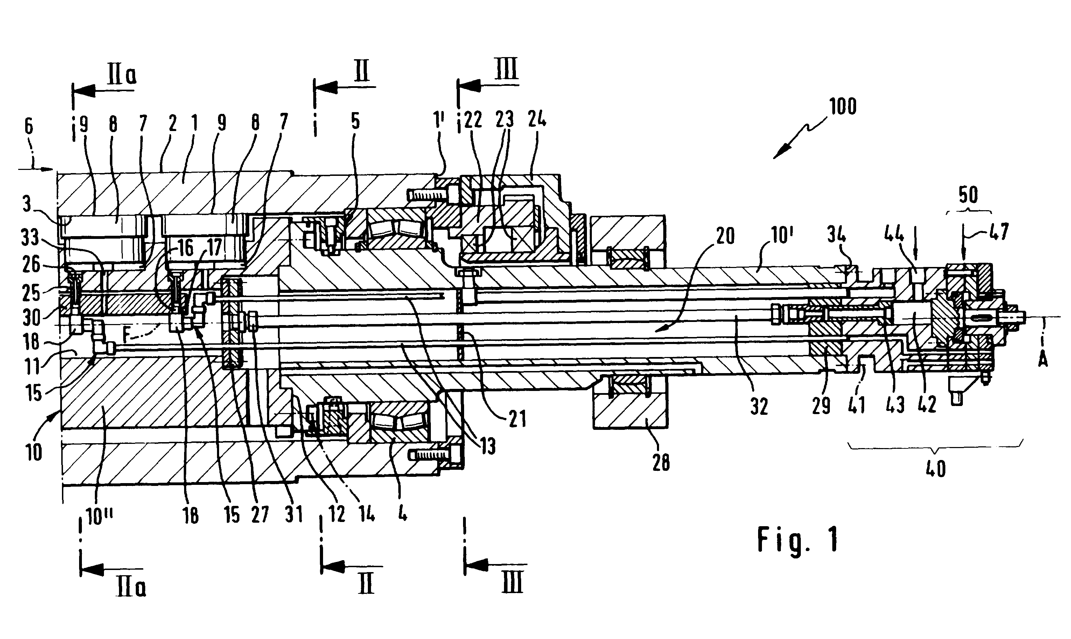

Die in Fig. 1 als Ganzes mit 100 bezeichnete Walze umfaßt eine umlaufende Hohlwalze 1, deren Außenumfangsfläche den arbeitenden Walzenumfang 2 bildet und die einen glatten geschlossenen zylindrischen Innenumfang 3 aufweist. Die Hohlwalze ist der Länge nach von einem balkenförmigen Querhaupt 10 durchgriffen, welches an den Enden 10' aus der Hohlwalze 1 vorsteht und dort, was durch 28 angedeutet sein soll, in einem Walzenständer, in den Schwingen eines Kalanders oder in einer ähnlichen Abstützeinrichtung abgestützt ist. Die vorstehenden Enden 10' bilden die Walzenzapfen der Walze 100. In dem Ausführungsbeispiel sind sie als separate Teile hergestellt, die längs einer in der Nähe der Enden der Walze 100 gelegenen Fügefläche 12 mit dem einstückigen Mittelteil 10" des Querhaupts 10 mittels Schrauben 14 zusammengefügt sind.

Von der Walze 100 ist nur das rechte Ende gezeichnet; Es versteht sich aber, daß die Walze 100 am anderen Ende in gleicher Weise ausgebildet sein kann.

An dem in Fig. 1 dargestellten Ende ist die Hohlwalze 1 über Wälzlager 4 auf dem Querhaupt 10 drehgelagert. Innenseitig des Wälzlagers 4 ist eine Gleitringdichtung 5 vorgesehen, die den Austritt von Lecköl aus dem Innern der Hohlwalze 1 axial nach außen verhindert.

An dem in Fig. 1 rechten Ende 1' der Hohlwalze 1 sind in Fig. 1 zwei unterschiedliche Ausführungen wiedergegeben. Unten ist eine nichtangetriebene Ausführungsform sichtbar. Oben ist mit dem Ende 1' ein Zahnring 22 verbunden, an welchem ein nicht dargestelltes Antriebsritzel für die Drehung der Hohlwalze 1 angreift. Das Antriebsritzel ist in einem Getriebegehäuse 24 gelagert, welches seinerseits über Lager 23 auf dem Zahnring 22 abgestützt ist. Das Getriebegehäuse 24 macht also die etwaigen Durchbiegungsbewegungen der Hohlwalze 1 mit. Der Eingriff des Ritzels in den Zahnring 22 bleibt davon unberührt.

Auf der Seite des in Fig. 1 oben gelegenen Walzspalts 6 sind in dem Querhaupt 10 zylindrische Ausnehmungen 7 mit zur Achse des Querhaupts 10 radialer Achse vorgesehen, in denen Stützelemente 8 nach Art einer Kolben/Zylindereinheit radial beweglich sind, die mit ihrer äußeren, hydrostatische Lagertaschen aufweisenden Anlageflächen 9 gegen den Innenumfang 3 der Hohlwalze 1 anliegen. Den Stützelementen 8 wird in einer noch zu beschreibenden Weise ein fluides Druckmedium, in dem Ausführungsbeispiel hydraulische Druckflüssigkeit zugeführt. Unter dem Druck dieser Druckflüssigkeit legen sich die Stützelemente 8 gegen den Innenumfang 3 der Hohlwalze 1, drücken diese gemäß Fig. 1 nach oben und bewirken auf diese Weise eine Linienkraft in dem Walzspalt 6. Das Querhaupt 10 biegt sich unter der Gegenkraft der Stützelemente 8 innerhalb der Hohlwalze 1 etwas durch, wozu der ringsum bestehende Abstand erforderlich ist, wenn es nicht zu einer Berührung des Innenumfangs 3 der Hohlwalze 1 und des Querhaupts 10 kommen soll.

In dem gezeichneten Ausführungsbeispiel sind die Stützelemente 8 dicht bei dicht angeordnet. Über die Länge der Walze folgen bei einem Ausführungsbeispiel mit etwa sieben Meter Arbeitsbreite achtundzwanzig Stützelemente 8 in einer auf der Seite des Walzspalts 6 gelegenen achsparallelen Reihe aufeinander.

Alle achtundzwanzig Stützelemente 8 müssen in dem Ausführungsbeispiel je für sich mit einer separat steuerbaren Druckflüssigkeit versorgt werden. Dies geschieht durch einzelne Versorgungsleitungen 13 in Gestalt von Rohren, die durch eine zentrale Längsausnehmung 11 des Querhaupts 10 herangeführt werden. Die Versorgungsleitungen 13 sind in zwei untereinander gleichen Versorgungseinheiten zusammengefaßt, von denen eine als Ganzes in Fig. 1 mit 20 bezeichnet ist und sich von dem rechten Ende des Querhaupts 10 bis kurz vor die zur Achse senkrechte Mittelebene des Querhaupts 10 erstreckt.

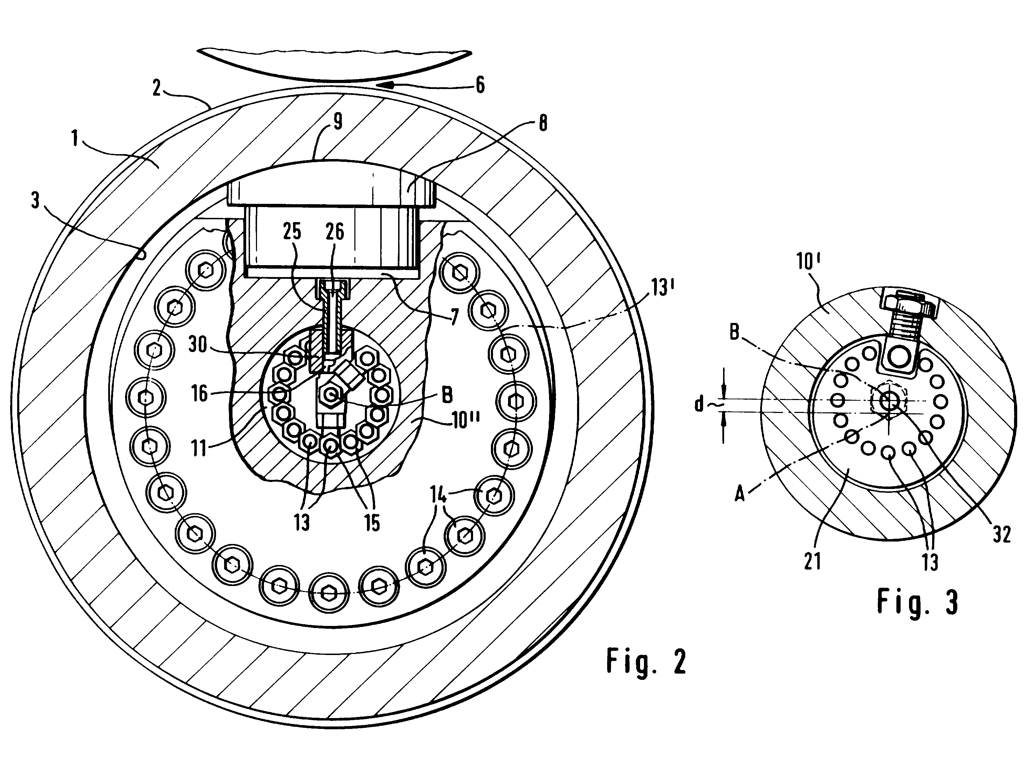

Die einzelnen Versorgungsleitungen 13 sind innerhalb der Längsausnehmung 11 auf einem Teilkreis 13' um eine in Längsrichtung verlaufende Achse B angeordnet, die gegenüber der Achse A des Querhaupts 10 um einen geringen Betrag gegen den Walzspalt 6 hin versetzt ist, wie es aus Fig. 2 und 3 ersichtlich ist. Jede Versorgungsleitung 13 führt bis zu dem ihr zugeordneten Stützelement 8 und mündet dort in ein Winkelanschlußstück 15, welches zwei S-förmig zusammengesetzte einzelne Winkelstücke umfaßt und eine Verkröpfung des Leitungsweges bewirkt. Die Winkelanschlußstücke 15 sind mit einem Anschlußzapfen 16 in radiale Bohrungen 17 eines Trägers 30 eingesetzt, der aus einem Profilstab quadratischen Querschnitts besteht, der mit einer Seite an der Oberseite der Längsausnehmung 11 anliegt (Fig. 2) und sich von dem jeweiligen Ende des Mittelteils 10" des Querhaupts 10 bis etwa zu dessen Mitte erstreckt. Die abgekröpften Endbereiche 18 des Strömungsweges der Versorgungsleitungen 13 in dem jeweiligen Winkelanschlußstück 15 liegen sämtlich auf der gemeinsamen achsparallelen Achse B, die die Fluchtlinie bildet, so daß die den Anschluß an den Träger bewirkenden Endteile der Winkelanschlußstücke 15 an dem Träger 30 alle gleich ausgerichtet werden können. Die Winkelanschlußstücke 15 stehen, wie aus Fig. 2 zu ersehen ist, in einer zur Achse senkrechten Ebene unter verschiedenen Winkeln, um die jeweilige Versorgungsleitung 13 an die Achse B heranzuführen.

Alle Versorgungsleitungen 13 einer Versorgungseinheit 20 sind also durch den Träger 30 miteinander verbunden. In zweckentsprechenden Abständen längs des Querhauptes 10 können an den Träger 30 angeschraubte, sich senkrecht zur Achse erstreckende Haltescheiben 21 vorgesehen sein, die Bohrungen zur Hindurchführung der Versorgungsleitungen 13 aufweisen und diese in der richtigen Anordnung abstützen. Der Träger 30 mit den daran befestigten Versorgungsleitungen 13 bildet auf diese Weise eine gut handhabbare balkenförmige Versorgungseinheit 20 von etwa der halben Walzenlänge. Jeweils eine derartige Versorgungseinheit 20 ist vom jeweiligen Ende 10' des Querhaupts 10 her in dieses einschiebbar.

In dem Boden jeder einzelnen zylindrischen, zur Aufnahme eines Stützelements 8 bestimmten Ausnehmung 7 ist eine Kopfschraube 25 eingeschraubt, die eine durchgehende Längsbohrung 26 aufweist. Die Schraube 25 legt einerseits den Träger 30 an der oberen Begrenzung der Längsausnehmung 11 fest und bildet andererseits den Strömungsweg für die Druckflüssigkeit, die auf diese Weise aus der Leitung 13 in einem geschlossenen Verlauf in das Innere der Ausnehmung 7 übertreten kann. Die mechanisch und strömungsmäßig Verbindungsstücke bildenden Schrauben 25 können in jede einzelne Ausnehmung 7 von außerhalb des Querhaupts 10 eingeschraubt werden.

Die Längsausnehmung 11 in dem Mittelteil 10" des Querhaupts 10 ist an dessen Enden durch Endplatten 27 nach außen verschlossen, durch die die Versorgungsleitungen 13 in entsprechenden Bohrungen hindurchgeführt sind. Die Versorgungsleitungen 13 gehen nach außen hin durch die Endstücke 10' des Querhaupts 10 hindurch und treten an einem von ihnen durchsetzten äußeren Abschlußblock 29 zutage.

An den Endplatten 27 sind Anschlüsse 31 für Druckflüssigkeit vorgesehen, durch die die Längsausnehmung 11 mit Druckflüssigkeit füllbar ist. Die Anschlüsse 31 sind über in der Länge den Endstücken 10' entsprechende Verbindungsrohre 32 mit dem Anschlußblock 29 verbunden.

Die Druckflüssigkeit in der Längsausnehmung 11 kann im Bedarfsfalle über Bohrungen 33 in dem Boden der jeweiligen Ausnehmung 7 dieser zugeführt werden. Umgekehrt kann auch durch die Anschlüsse 31 Druckflüssigkeit aus der Längsausnehmung 11 hinweggeführt werden.

An der in Fig. 1 rechten Stirnseite 34 des dortigen Endes 10' des Querhaupts 10 ist ein als Ganzes mit 40 bezeichneter Anschlußkopf angebracht, der dem gleichzeitigen Anschluß und gegebenenfalls der gleichzeitigen Trennung und Abdichtung sämtlicher Versorgungsleitungen und der Zuleitung 32 zu der Längsausnehmung dient.

Der Anschlußkopf 40 ist ein im Ganzen im wesentlichen zylindrisches Teil von einem etwa dem Ende 10' entsprechenden Durchmesser, welches mittels Schrauben 41 an der Stirnfläche 34 befestigt ist. Der Anschlußkopf 40 weist in seinem linken Teil eine zentrale Längsbohrung 42 mit einem Absatz 42' auf, gegen den sich die Unterseite einer hohlgebohrten Kopfschraube 43 setzt, die in den Anschlußblock 29 eingeschraubt ist und diesen und den Anschlußkopf 40 gegeneinanderzieht sowie gleichzeitig die Flüssigkeitsverbindung von der Längsbohrung 42 zu der Leitung 32 herstellt. Die für die Leitung 32 vorgesehene Flüssigkeit tritt an dem Anschluß 44 in die Längsbohrung 42 ein.

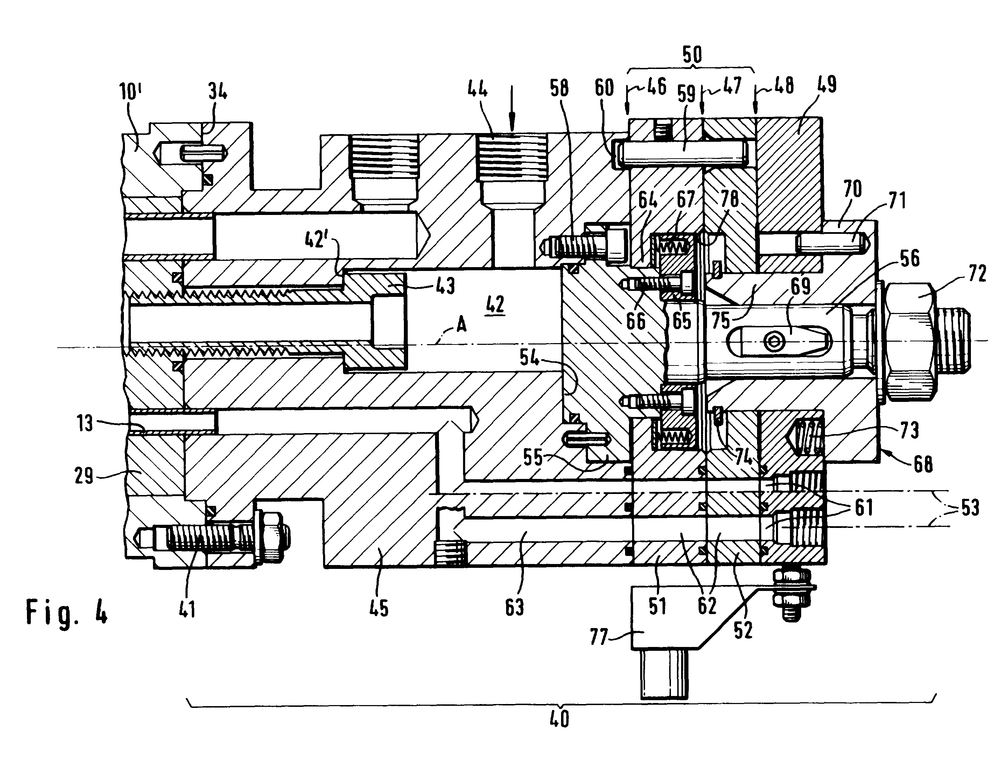

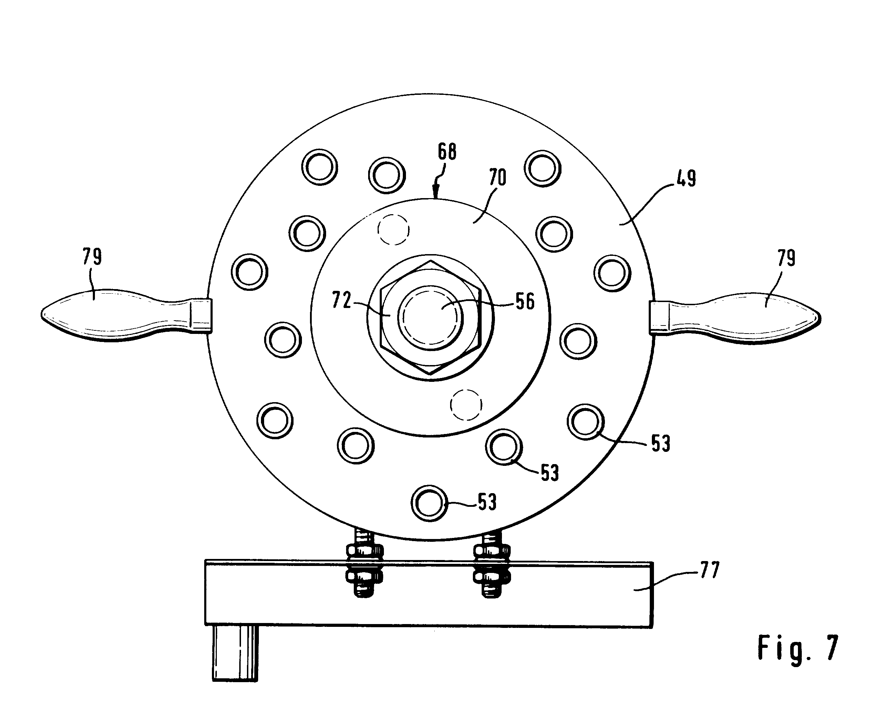

Wie aus Fig. 4 ersichtlich ist, besteht der Anschlußblock 40 im wesentlichen aus vier auf zur Achse A senkrechten Flächen 46,47,48 axial aneinander anliegenden Teilen. Das erste Teil ist der an die Stirnfläche 34 des Endes 10' des Querhaupts angeschraubte sogenannte erste Träger 45, gegen den an seiner rechten Stirnfläche 46 ein als Ganzes mit 50 bezeichneter Doppelscheiben-Drehschieber anliegt, der an einer Fläche 47 axial teilbar ist und gegen dessen in Fig. 4 rechte Stirnfläche 48 der sogenannte zweite Träger 49 gesetzt ist, der die in Fig. 4 nur angedeuteten äußeren Anschlußleitungen 53 zur Beaufschlagung der Versorgungsleitungen 13 trägt. Der Doppelscheiben-Drehschieber 50 umfaßt eine erste Scheibe 51, die gegen die Fläche 46 anliegt und das "zweite" Teil bildet, und eine gegen die Fläche 48 anliegende zweite Scheibe 52, die das "dritte" Teil darstellt. Auch der das "vierte" Teil bildende zweite Träger 49 ist scheibenförmig ausgebildet. In einer zu der Achse A koaxialen kreisförmig begrenzten Ausnehmung 54 der rechten Stirnfläche 46 des ersten Trägers 45 ist mit einem Endflansch 55 ein in Achsrichtung nach außen vorstehender Bolzen 56 befestigt, auf dem der Doppelscheiben-Drehschieber 50 und der zweite Träger 49 gelagert sind. Die Befestigung des Bolzens 56 in der Ausnehmung 54 erfolgt mittels achsparalleler Kopfschrauben 58. Der Doppelscheiben-Drehschieber 50 ist als Ganzes mittels Handgriffen 79 (Fig. 7) zwischen den Trägern 45,49 um einen bestimmten Drehwinkel drehbar. Die beiden Scheiben 51,52 des Doppelscheiben-Drehschiebers 50 sind durch einen im radial äußeren Bereich angebrachten, beide Scheiben 51,52 durchgreifenden Stift 59 drehverbunden. Der Stift 59 steht aus der Scheibe 51 in eine Bogennut 60 in der rechten Stirnfläche 46 des ersten Trägers 45 vor. Die Winkelerstreckung dieser Bogennut 60 bestimmt den möglichen Schwenkwinkel des Doppelscheiben-Drehschiebers 50. In der einen Grenzstellung bilden die Kanäle 61 der Anschlußleitungen 53 in dem zweiten Träger 49, die Durchgangsbohrungen 62 in dem Doppelscheiben-Drehschieber 50 und die Anschlußkanäle 63 der Versorgungsleitungen 13 in dem ersten Träger 45 durchgehende achsparallele Kanäle. In der anderen Grenzstellung ist der Doppelscheiben-Drehschieber 50 soweit verdreht, daß seine Durchgangsbohrungen 62 nicht mehr zwischen den Kanälen 61,63 stehen, sondern diese verschließen. In dieser Stellung ist der Doppelscheiben-Drehschieber 50 an der Fläche 47 axial trennbar, ohne daß der Verschluß der Anschlußkanäle 61,63 aufgegeben wird. Hierauf wird nachstehend noch eingegangen.

Die Scheibe 51 besitzt eine von dem Zapfen 56 durchgriffene Ausnehmung 78 mit einem radial nach innen vorspringenden Bund 64 an der der Stirnfläche 46 des ersten Trägers 45 benachbarten Begrenzungsfläche. In der Ausnehmung ist ein Ring 65 angeordnet, der mittels Schrauben 66 an einem Absatz des Zapfens 56 befestigt ist und sich radial bis vor dem Bund 64 erstreckt. In diesem Bereich sind in dem Ring 65 über den Umfang verteilte Schraubendruckfedern 67 vorgesehen, die gegen den Bund 64 wirken und die Scheiben 51 satt gegen die Stirnfläche 46 des Trägers 45 drücken.

Axial außerhalb des Rings 65 ist auf dem Zapfen 56 eine Bundbuchse 68 angeordnet, die durch einen Keil 69 auf dem Zapfen 56 drehgesichert ist und mit ihrem radial nach außen vorspringenden Bund 70 vor die in Fig. 4 rechte Begrenzungsfläche des zweiten Trägers 49 greift. Durch einen dort angebrachten achsparallelen Stift 71 ist der Träger 49 gegenüber der Bundbuchse 68, gegenüber dem Keil 69, gegenüber dem Zapfen 56, gegenüber dem ersten Träger 45 und gegenüber dem Querhaupt 10 drehfest. Auf dem gegen das Innere der Walze 100 gerichteten außen zylindrischen Buchsenteil 75 der Bundbuchse 68 sind die Scheibe 52 und der zweite Träger 49 angeordnet. Der Zapfen 56 springt bis außerhalb der äußeren Begrenzungsfläche der Bundbuchse 68 vor und trägt dort ein Gewinde mit einer Mutter 72, mittels derer das ganze Paket der Teile 45,51,52,49 zu einer Baueinheit zusammengehalten wird, innerhalb derer der Doppelscheiben-Drehschieber 50 verdrehbar ist.

In dem zweiten Träger 49 sind in seiner dem Bund 70 zugewandten Begrenzungsfläche über den Umfang verteilte achsparallele Schraubendruckfedern 73 angeordnet, die gegen den Bund 70 wirken. Die Schraubendruckfedern 73 bekommen eine Bedeutung im Falle der Leitungstrennung. Sie drücken nämlich dann die Teile 52,49 gegen den Sprengring 74, der außen an dem dem Bund 70 abgewandten Ende der Bundbuchse 68 angebracht ist und axial gegen die Scheibe 52 wirkt. Die Scheibe 52 und der zweite Träger 49 werden dann also gemeinsam durch die Schraubendruckfedern 73 von dem Bund 70 hinweg gegen den Sprengring 74 gedrückt, wobei die dichtende Anlage an der Fläche 48 erhalten bleibt.

In Fig. 4 ist der Anschlußkopf 40 im Betriebszustand der Walze wiedergegeben, in welchem also über die jeder Versorgungsleitung 13 zugeordnete jeweilige Anschlußleitung 53 Druckflüssigkeit eingeleitet wird.

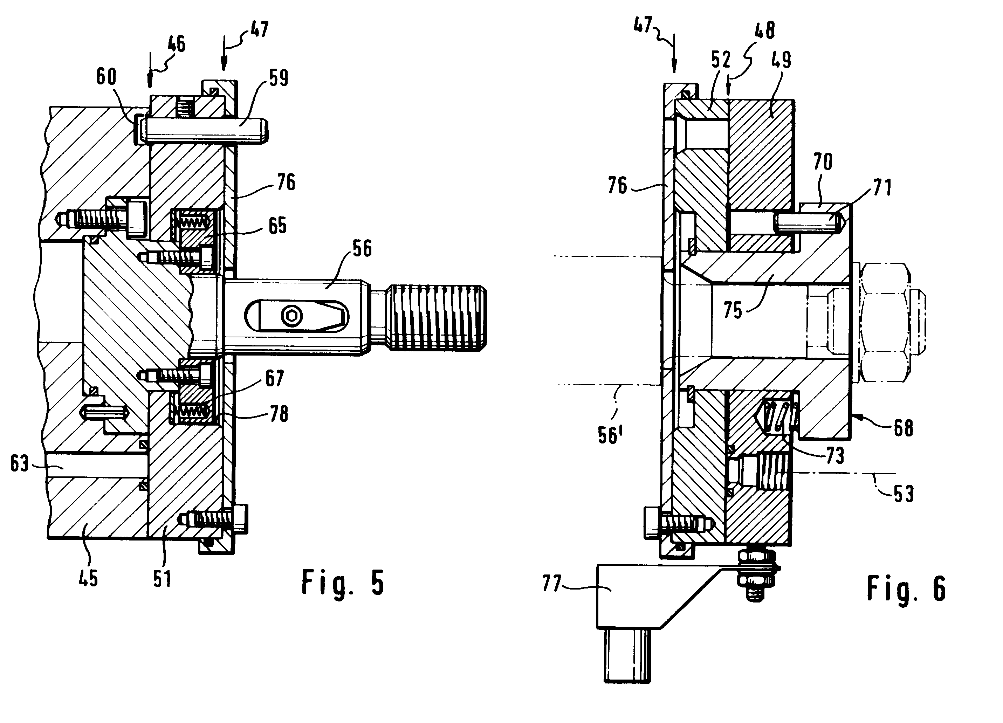

Wenn die Walze aus irgendeinem Grund ausgewechselt werden soll, wird bei geschlossenem Doppelscheiben-Drehschieber 50 die Mutter 72 abgeschraubt und die Walze 100 mit dem daran befindlichen ersten Träger 45 und der ersten Scheibe 51 des Doppelscheiben-Drehschiebers 50 gemäß Fig. 1 oder 4 nach links abgezogen, wobei eine Trennung des Doppelscheiben-Drehschiebers 50 an der Fläche 47 erfolgt. Die Scheibe 51 bleibt in dichtender Anlage an der Stirnfläche 46 des ersten Trägers 45, weil sie durch den Ring 65, der ja mit dem ersten Träger verbunden ist, und die Schraubendruckfedern 67 angepreßt wird. Die mit der Walze 100 herausgezogene Hälfte des Anschlußkopfes 40 ist in Fig. 5 dargestellt.

Die in Fig. 6 wiedergegebene rechte Hälfte des Anschlußkopfes 40 mit der Scheibe 52 und dem zweiten Träger 49 verbleibt an den Anschlußleitungen 53. Die gesamte Anschlußanordnung mit Pumpen, Steuerung und Anschlußleitungen 53 kann so bleiben, wie sie ist. Die Scheibe 52 beharrt in der Geschlossenstellung, wobei die Schraubendruckfedern 73 nach dem Lösen nach der Mutter 72 die Scheibe 52 und den zweiten Träger 49 auf dem Buchsenteil 75 der Bundbuchse 68 nach links bis zur Anlage an dem Sprengring 74 verlagern, dabei aber die dichtende Anlage der Scheibe 52 an dem zweiten Träger 49 aufrechterhalten.

Die Anschlußleitungen 53 mit den daran befindlichen Teilen des Anschlußkopfes 40 können im Prinzip einfach hängengelassen werden, bis der Wiederanschluß einer Walze erfolgt. Es ist aber auch möglich, einen an einem Ständer angeordneten, dem Bolzen 56 nachgebildeten Träger 56' vorzusehen, der in Fig. 6 gestrichelt angedeutet ist.

Um bei getrenntem Anschlußkopf 40 das Heraustropfen von Ölresten und insbesondere das Eindringen von Verschmutzungen in die Durchgangsbohrungen 62 (Fig. 4) zu verhindern, können Abdeckscheiben 76 vorgesehen sein, die die Scheiben 51,52 an der Trennfläche 47 abdecken.

Im Moment der Trennung stehen die Durchgangsbohrungen 62 voll Öl, welches an der Trennfläche 47 unten herausläuft. Um dieses Öl nicht unkontrolliert in die Umgebung ablaufen zu lassen, kann es in einer unter der Trennfläche 47 angeordneten Sammelrinne 77 aufgefangen werden.

## Patentansprüche

1. Durchbiegungssteuerbare Walze (100),
mit einer um ihre Achse umlaufende, mit ihrer Außenumfangsfläche den arbeitenden Walzenumfang (2) bildenden Hohlwalze (1),
mit einem die Hohlwalze (1) der Länge nach durchgreifenden, an den Enden an einer äußeren Abstützung abgestützten, undrehbaren, ringsum radialen Abstand vom Innenumfang (3) der Hohlwalze (1) belassenden Querhaupt (10),
mit in einer Reihe längs des Querhaupts (10) an diesem angebrachten, mit einem fluiden Druckmedium betätigbaren Stützelementen (8)
mit mehreren durch eine zentrale Längsausnehmung (11) des Querhaupts (10) von dessen Enden her herangeführten Versorgungsleitungen (13) zur Beaufschlagung einzelner oder mehrerer, gruppenweise gemeinsam an eine Versorgungsleitung (13) angeschlossenen Stützelementen (8) mit dem Druckmedium,
und mit einem am Anschlußende (10') des Querhauptes (10) vorgesehenen Anschlußkopf (40), an welchem die in die Längsausnehmung (11) des Querhaupts (10) führenden Versorgungsleitungen (13) von den äußeren Anschlußleitungen (53) gemeinsam trennbar sind,
**dadurch gekennzeichnet,**
daß sämtliche Versorgungsleitungen (13) gemeinsam und sämtliche Anschlußleitungen (53) gemeinsam jeweils separat verschließbar sind.

2. Walze nach Anspruch 1, **dadurch gekennzeichnet**, daß die Trennung und das Verschließem im wesentlichen durch nur eine einzige Betätigungsbewegung eines Steuerelemets erfolgen.

3. Walze nach Anspruch 2, **dadurch gekennzeichnet**, daß als Steuerelement ein Drehschieber vorgesehen und die Betätigungsbewegung dessen Drehung ist.

4. Walze nach Anspruch 3, **dadurch gekennzeichnet,** daß der Anschlußkopf (40) folgende Merkmale aufweist:
a) einen ersten träger (45) der zur Achse (A) des Querhaupts (10) parallel, und in einer zu der Achse (A) senkrechten Stirnfläche (46) des Trägers (45) ausmündenden Enden der Versorgungsleitungen (13);
b) einen zweiten Träger (49), der zur Achse (A) des Querhaupts (10) parallelen und in eine zu der Achse (A) senkrechten Stirnfläche (46) des ersten Trägers (45) zugewandten Stirnfläche (48) ausmündenden Enden der äußeren Anschlußleitungen (53), von denen jeweils eine mit dem Ende einer Versorgungsleitung (13) fluchtet;
c) einen zwischen die Stirnflächen (46,48) dicht anliegende passenden Doppelscheiben-Drehschieber (50) mit achsparallelen Durchgangsbohrungen (62) an den Stellen der Versorgungsleitungen (13) bzw. Anschlußleitungen (53), der aus einer Schließstellung, in der der Doppelscheiben-Drehschieber (50) die Ausmündungen der Versorgungsleitungen (13) und Anschlußleitungen (52) verschließt, in eine Durchlaßstellung verdrehbar ist, in der die Durchlaßbohrungen (62) mit den Enden der Versorgungsleitungen (13) und der Anschlußleitungen (53) fluchten;
d) der Doppelscheiben-Drehschieber (50) ist in der Mitte unter Erhaltung der Anlage der ihn bildenden beiden Scheiben (51,52) an den jeweiligen Stirnseiten (46) bzw. (48) der Träger (45) bzw. (49) teilbar.

5. Walze nach Anspruch 4, **dadurch gekennzeichnet**, daß der erste Träger (45) an dem Anschlußende (10') des Querhaupts (10) befestigt ist und von ihm ein zentraler Zapfen (56) axial vorspringt, auf dem der Doppelscheiben-Drehschieber (50) und der zweite Träger (49) angeordnet sind.

6. Walze nach Anspruch 5, **dadurch gekennzeichnet**, daß auf dem Zapfen (56) ein Ring (65) befestigt ist, der in eine Ausnehmung (78) der dem ersten Träger (45) benachbarten ersten Scheibe (51) angeordnet ist und axial gegen einen Innenbund (64) der Ausnehmung (78) wirkt, um die erste Scheibe (51) axial gegen die Stirnfläche (46) des ersten Trägers (45) zu drücken.

7. Walze nach Anspruch 6, **dadurch gekennzeichnet**, daß der Ring (65) über eine federnde Anordnung (67) gegen den Innenbund (64) wirkt.

8. Walze nach einem der Ansprüche 5 bis 7, **dadurch gekennzeichnet**, daß auf dem Zapfen (56) eine Bundbuchse (68) befestigbar ist, deren Bund (70) axial von außen gegen den zweiten Träger (49) anliegt, um dessen Stirnseite (48) gegen die zugewandte zweite Scheibe (52) des Doppelscheiben-Drehschiebers (50) und diese Scheibe (52) gegen die erste Scheibe (51) zu drücken.

9. Walze nach Anspruch 8, **dadurch gekennzeichnet**, daß der Bund (70) über eine federnde Anordnung (73) gegen die zweite Scheibe wirkt.

10. Walze nach einem der Ansprüche 4 bis 9, **dadurch gekennzeichnet**, daß die zweite Scheibe (52) und der zweite Träger (49) auf dem Buchsenteil (75) der Bundbuchse (68) angeordnet sind.

11. Walze nach Anspruch 10, **dadurch gekennzeichnet**, daß die Bundbuchse (68) undrehbar auf dem Zapfen (56) angeordnet ist, daß der Zapfen (56) axial aus der Bundbuchse (56) herausziehbar ist und daß der zweite Träger (49) undrehbar auf dem Buchsenteil (75) der Bundbuchse (68) angeordnet ist.

12. Walze nach einem der Ansprüche 4 bis 11, **dadurch gekennzeichnet**, daß die beiden Scheiben (51,52) des Doppelscheiben-Drehschiebers (50) derart drehgekoppelt sind, daß sie axial trennbar bleiben.

13. Walze nach Anspruch 12, **dadurch gekennzeichnet**, daß zur Drehkopplung ein achsparalleler, außerhalb der Achse (A) angeordneter, in beide Scheiben (51,52) eingreifender Stift (59) vorgesehen ist.

14. Walze nach Anspruch 13, **dadurch gekennzeichnet**, daß der Stift (59) axial über eine der Scheiben (51,52) vorsteht und mit dem vorstehenden Ende in eine den Verdrehwinkel des Doppelscheiben-Drehschiebers (50) gegenüber den Trägern (45,49) begrenzende, in einem der Träger (45) oder (49) vorgesehene Bogennut (60) eingreift.

15. Walze nach einem der Ansprüche 4 bis 14, **dadurch gekennzeichnet**, daß unter dem Bereich der Trennfläche (47) des Doppelscheiben-Drehschiebers (50) eine Sammelrinne (77) für an der Trennfläche (47) bei der Trennung austretendes Öl vorgesehen ist.

16. Walze nach einem der Ansprüche 4 bis 15, **dadurch gekennzeichnet**, daß Abdeckscheiben (76) vorgesehen sind, mittels deren die einander zugewandten Seiten der Scheiben (51,52) des Doppelscheiben-Drehschiebers (50) in getrenntem Zustand dicht abdeckbar sind.

## Claims

1. A controlled-deflection roller (100),
comprising a shell (1) which rotates about its axis and which by its outer peripheral surface forms the working roller periphery (2),
comprising a non-rotatable beam (10) which extends through the length of the shell (1), is supported at the ends on an outer support and which has all round radial spacing from the inner periphery (3) of the shell (1),
comprising support elements (8) disposed in a row along and on the beam (10) and adapted to be actuated by a fluid pressure medium,
and comprising a plurality of supply lines (13) which are provided through a central longitudinal opening (11) of the beam (10) from the ends thereof, for supplying the pressure medium to individual or a plurality of support elements (8) which are connected group-wise jointly to a supply line (13),
and comprising a connection head (40) which is provided at the connection end (10') of the beam (10) and at which the supply lines (13) leading into the longitudinal opening (11) of the beam (10) are jointly separable from the outer connection lines (53),
characterised in that
all the supply lines (13) jointly and all the connection lines (53) jointly are respectively separately closable.

2. A roller according to claim 1, characterised in that the separation and closure are effected by substantially a single actuation movement of a control element.

3. A roller according to claim 2, characterised in that the control element provided is a rotary valve and the actuation movement is the rotation thereof.

4. A roller according to claim 3, characterised in that the connection head (40) has the following features:
a) a first support (45) for the ends of the supply lines (13), which ends are parallel to the axis (A) of the beam (10) and discharge at an end face (46) of the support (45) perpendicular to the axis (A);
b) a second support (49) for the ends of the outer connection lines (53), which ends are parallel to the axis (A) of the beam (10) and discharge at an end face (48) facing that end face (46) of the first support (45) which is perpendicular to the axis (A), each such connecting line (53) being in alignment with the end of a supply line (13);
c) a double-disc rotary valve (50) which fits in sealing-tight contact between the end faces (46, 48) and which has axis-parallel continuous bores (62) at the locations of the supply lines (13) and connection lines (53) and which is rotatable from a closed position in which the double-disc rotary valve (50) closes the discharge orifices of the supply lines (13) and connection lines (52) into a passage position in which the passage bores (62) are in alignment with the ends of the supply lines (13) and the connection lines (53);
d) the double-disc rotary valve (50) is divisible in the middle while maintaining contact between the two discs (51, 52) forming it, at the respective end faces (46) and (48) of the supports (45) and (49).

5. A roller according to claim 4, characterised in that the first support (45) is fixed at the connection end (10') of the beam (10) and a central stud (56) projects axially therefrom, the double-disc rotary valve (50) and the second support (49) being disposed on said stud.

6. A roller according to claim 5, characterised in that a ring (65) is fixed on the stud (56) and is disposed in a recess (78) in the first disc (51) adjacent the first support (45) and acts axially against an inner collar (64) of the recess (78) to press the first disc (51) axially against the end face (46) of the first support (45).

7. A roller according to claim 6, characterised in that the ring (65) acts against the inner collar (64) via a resilient arrangement (67).

8. A roller according to any one of claims 5 to 7, characterised in that a flanged bush (68) is adapted to be fixed on the stud (56), its flange (70) bearing axially from outside against the second support (49) to press its end face (48) against the facing second disc (52) of the double-disc rotary valve (50) and said disc (52) against the first disc (51).

9. A roller according to claim 8, characterised in that the flange (70) acts against the second disc via a resilient arrangement (73).

10. A roller according to any one of claims 4 to 9, characterised in that the second disc (52) and the second support (49) are disposed on the bush part (75) of the flanged bush (68).

11. A roller according to claim 10, characterised in that the flanged bush (68) is disposed non-rotatably on the stud (56), in that the stud (56) can be withdrawn axially from the flanged bush (56) and in that the second support (49) is disposed non-rotatably on the bush part (75) of the flanged bush (68).

12. A roller according to any one of claims 4 to 11, characterised in that the two discs (51, 52) of the double-disc rotary valve (50) are so coupled for rotation as to remain axially separable.

13. A roller according to claim 12, characterised in that a pin (59) engaging in both discs (51, 52) and disposed in axis-parallel relationship outside the axis (A) is provided for the rotational coupling.

14. A roller according to claim 13, characterised in that the pin (59) projects axially beyond one of the discs (51, 52) and engages by the projecting end in an arcuate groove (60) provided in one of the supports (45 or 49) to limit the angle of rotation of the double-disc rotary valve (50) relative to the supports (45, 49).

15. A roller according to any one of claims 4 to 14, characterised in that a collecting channel (77) for oil escaping at the separating surface (47) on separation is provided beneath the zone of the separating surface (47) of the double-disc rotary valve (50).

16. A roller according to any one of claims 4 to 15, characterised in that cover discs (76) are provided by means of which the facing sides of the discs (51, 52) of the double-disc rotary valve (50) can be sealingly covered in the separated state.

## Revendications

1. Cylindre à flexion contrôlée (100), dans lequel :
• un cylindre creux (1) tournant sur son axe, a sa surface périphérique (2) qui constitue la surface de travail,
• à l'intérieur du cylindre creux (1) et sur toute la longueur de celui-ci, passe une traverse (10) fixe dont les extrémités reposent sur des appuis extérieurs et qui laisse un certain intervalle radial entre elle et la périphérie interne (3) du cylindre creux,
• le long de la traverse (10) est montée sur celle-ci une série d'éléments de soutien (8) qui peuvent être actionnés par l'intermédiaire d'un fluide sous pression,
• dans un évidement longitudinal central (11) de la traverse (10) sont introduits à partir des extrémités de cet évidement, plusieurs canalisations (13) alimentant en fluide sous pression des éléments de soutien (8) raccordés individuellement, à plusieurs ou en un groupe commun à une canalisation d'alimentation (13),
• à une extrémité de raccordement (10') de la traverse (10) est montée une tête de raccordement permettant d'isoler des canalisations extérieures de raccordement (53) l'ensemble des canalisations d'alimentation (13) aboutissant à l'évidement longitudinal (11) de la traverse (10),
caractérisé en ce que
l'ensemble des canalisations d'alimentation (13) et l'ensemble des canalisations de raccordement (53) peuvent chacun être fermés séparément.

2. Cylindre selon la revendication 1,
caractérisé en ce que
la séparation et la fermeture s'effectuent essentiellement par un seul déplacement d'un élément de commande.

3. Cylindre selon la revendication 2,
caractérisé en ce que
l'élément de commande est une vanne rotative et le déplacement est la rotation de celle-ci.

4. Cylindre selon la revendication 3,
caractérisé en ce que
la tête de raccordement (40) présente les caractéristiques suivantes :
a) un premier support (45) porte les extrémités des canalisations d'alimentation (13) parallèles à l'axe (A) de la traverse et débouchant dans une face frontale (46) de ce support, perpendiculaire à l'axe (A),
b) un second support (49) porte les extrémités des canalisations de raccordement (53) parallèles à l'axe (A) de la traverse et débouchant dans la face frontale perpendiculaire à l'axe (A), située en regard (48) du premier support (45), ces extrémités étant alignées chacune avec une canalisation d'alimentation (13),
c) entre les faces frontales (46, 48), est montée avec appui étanche une vanne rotative à double tiroir (50) percée d'alésages de passage (62) d'axes parallèles et disposés comme les canalisations d'alimentation (13) et les canalisations de raccordement (53), cette vanne pouvant passer par rotation d'une position de fermeture dans laquelle elle obture les sorties des canalisations d'alimentation (13) et des canalisations de raccordement (52),
d) la vanne rotative à double tiroir (50) est séparable en son milieu avec maintien de l'appui de chacun des deux tiroirs (51, 52) qui la composent, sur la face frontale correspondante (46) ou (48) du support (45) ou (49).

5. Cylindre selon la revendication 4,
caractérisé en ce que
le premier support (45) est fixé à l'extrémité de raccordement (10') de la traverse (10) et de ce support part axialement en saillie un pivot central (56) sur lequel sont montés la vanne rotative à double tiroir (50) ainsi que le second support (49).

6. Cylindre selon la revendication 5,
caractérisé en ce que
sur le pivot (56) est fixée une bague (65) qui est logée dans un évidement (78) du premier tiroir (51) proche du premier support (45) et qui exerce sur un collet interne (64) de l'évidement (78) une action qui a pour effet d'appliquer le premier tiroir (51) axialement contre la face frontale (46) du premier support (45).

7. Cylindre selon la revendications 6,
caractérisé en ce que
la bague (65) agit sur le collet interne (64) par l'intermédiaire d'un dispositif élastique (67).

8. Cylindre selon une des revendications 5 à 7,
caractérisé en ce que
sur le pivot (56) peut être fixée une douille (68) présentant un collet (70) appliqué axialement de l'extérieur sur le second support (49) afin de mettre en pression la face frontale (48) de ce support (49) sur le second tiroir (52) de la vanne rotative à double tiroir (50) et de ce fait mettre en pression le second tiroir (52) sur le premier (51).

9. Cylindre selon la revendication 8,
caractérisé en ce que
le collet (70) agit sur le second tiroir par l'intermédiaire d'un dispositif élastique.

10. Cylindre selon une des revendications 4 à 9,
caractérisé en ce que
le second tiroir (52) et le second support (49) sont montés sur le corps (75) de la douille à collet (68).

11. Cylindre selon la revendication 10,
caractérisé en ce que
la douille à collet (68) est montée, sans pouvoir tourner, sur le pivot (56) qui peut être retiré axialement de la douille à collet (56) tandis que le second support (49) est monté, sans pouvoir tourner, sur le corps (75) de la douille à collet (68).

12. Cylindre selon une des revendications 4 à 11,
caractérisé en ce que
les deux tiroirs (51, 52) de la vanne rotative (50) à double tiroir sont accouplés en rotation tout en pouvant être séparés en direction axiale.

13. Cylindre selon la revendication lé,
caractérisé en ce qu'
il est prévu, pour l'entraînement en rotation, une broche (59) montée en dehors de l'axe (A), parallèlement à celui-ci et en prise dans les deux tiroirs (51, 52).

14. Cylindre selon la revendication 13,
caractérisé en ce que
la broche (59) dépasse en direction axiale un des tiroirs (51, 52) et par son extrémité en saillie est en prise dans une rainure en arc de cercle (60) prévue dans un des supports (45 ou 49) et limitant l'angle de rotation de la vanne rotative (50) par rapport aux supports (45, 49).

15. Cylindre selon une des revendications 4 à 14,
caractérisé en ce qu'
en dessous de la zone de la surface de séparation (47) de la vanne rotative à double tiroir (50) se trouve une rigole collectrice (77) de l'huile s'écoulant le long de cette surface (47) lorsqu'on sépare les tiroirs.

16. Cylindre selon une des revendications 4 à 15,
caractérisé en ce qu'
il est prévu des tiroirs de couverture (76) pour recouvrir de manière étanche les faces en regard des tiroirs (51, 52) de la vanne rotative (50) lorsque ces tiroirs sont séparés.
